# EUROPEAN PATENT APPLICATION

(11) **EP 4 086 028 A1**
(43) Date of publication of application: **09.11.2022**
(21) Application number: 21020246.1
(22) Date of filing: 03.05.2021
(51) Int. Cl.: B23K 9/095, B08B 7/00, B23K 9/235, B23K 10/00, B23K 103/10

(54) **PROCEDURE FOR CLEANING OF ALUMINIUM SURFACES AND DETERMINATION OF THE DEGREE OF CLEANING**

(71) Applicant: Linde GmbH, 82049 Pullach (DE)
(72) Inventor: Siewert, Erwan, Niederlauterbach (DE); Hussary, Nakhleh A., Ismaning (DE); Fehrenbach, Lukas, Unterschleißheim (DE)
(74) Representative: Lu, Jing

(57) **Abstract**

The present invention relates to a method for cleaning of a surface (8a) of at least one workpiece (8) made out of an aluminium alloy, comprising the steps of: generating an electric arc (3) or a plasma jet (3) by means of a torch (2), applying the electric arc (3) or the plasma jet (3) to the surface (8a), and moving the torch (2) and the at least one workpiece (8) relative to one another to clean the surface (8a) by evaporating impurities (9) of the surface (8a) using the electric arc (3) or plasma jet (3), and e.g. detecting light (L) coming from the electric arc (3) or plasma jet (3) by means of an optical sensor (4), wherein the optical sensor (4) generates an output signal indicative of the presence of impurities (9) of the surface (8a) evaporated by the electric arc (3) or by the plasma jet (3).

## Description

The invention relates to a method for cleaning of aluminium surfaces and to a corresponding device for arc cleaning of aluminium surfaces.

Aluminium alloys tend to form pores during welding. The pores can result from contaminations with e.g. oil or grease, from a bad shielding gas cover, from the oxide layer or the shielding gas or the filler material.

The workpieces to be welded must therefore be cleaned intensively before welding. The starting material is usually in the form of a plate.

Before welding, forming work is often carried out using greases and oils. The starting material is usually also cut to size. During all these steps impurities are incorporated into the surface of the material, so that they can often not be completely removed by solvents. The use of solvents can also lead to pore formation itself and may constitute a health and environmental hazard.

In order to remove impurities incorporated into the surface of the material, it is often necessary to remove a corresponding surface layer of the material, e.g. by grinding. Also, here, particles can be generated that pose a health hazard and an unwanted source of contamination for production. Furthermore, such grinding steps are also labor intensive.

Another possibility is to process the workpieces dry, i.e., without coolants and lubricants, before welding. Here, the disadvantage lies in the high acquisition costs and high stress on the tools due to the lack of coolants and lubricants.

Based on the above, the problem to be solved by the present invention is to provide a method for cleaning a surface of a workpiece formed out of an aluminium alloy before welding, which method is improved regarding the above-stated problems.

The problem is solved by a method for cleaning a surface of at least one workpiece made out of an aluminium alloy having the features of claim 1.

According thereto, the method comprises the steps of:
- generating an arc or a plasma jet by means of a torch, preferably a welding torch, applying the arc or the plasma jet to the surface of the at least one workpiece, and moving the torch and the at least one workpiece relative to one another to clean the surface by evaporating impurities using the electric arc or plasma jet, and
- generating at least one output signal indicative of the presence (or absence) of impurities of the surface evaporated by the electric arc or by the plasma jet.

According to a preferred embodiment, the step of generating at least one output signal corresponds to one of:
- Detecting light coming from the electric arc or plasma jet by means of an optical sensor, wherein the optical sensor generates at least one output signal indicative of the presence of impurities of the surface evaporated by the electric arc or by the plasma jet,
- deriving at least one output signal indicative of the presence of impurities of the surface evaporated by the electric arc or by the plasma jet from an electrical voltage used to generate the electric arc or plasma jet and/or from a corresponding electrical current of the electric arc or plasma jet,
- detecting sound waves coming from the electric arc or plasma jet by means of a sound sensor, wherein the sound sensor generates at least one output signal indicative of the presence of impurities of the surface evaporated by the electric arc or by the plasma jet.

According to a preferred embodiment of the method according to the present invention, the surface is processed by the arc or by the plasma jet until the at least one output signal obeys a predefined criterion corresponding to a desired degree of cleaning of the surface. This can also include that at least one parameter is derived from the at least one output signal which at least one parameter is then compared to the criterion and/or that the at least one output signal is pre-processed before analysis of the pre-processed at least one output signal regarding said criterion.

Furthermore, according to an embodiment, moving the torch and the at least one workpiece relative to one another corresponds to one of: moving the torch relative to the stationary at least one workpiece; moving the at least one workpiece relative to the stationary torch; moving the torch and moving the at least one workpiece.

Particularly, in an embodiment, the torch is moved with a movement generating device, preferably in form of a robot such as a robot arm.

According to an alternative embodiment, the torch is configured to be manually moved by a user with respect to the surface of the at least one workpiece in order to clean the surface using the electric arc or the plasma jet.

Particularly in case where the torch is manually moved, the torch is preferably guided by a guiding device in an embodiment of the method so that a distance between the torch and the surface is maintained at a constant level upon the relative movement between the torch and the at least one workpiece.

Furthermore, according to an embodiment of the method, an electric current corresponding to the electric arc or to the plasma jet is automatically adapted with respect to said relative movement of the torch and the at least one workpiece and / or based on said at least one output signal.

According to yet another embodiment of the method according to the present invention, a degree of cleaning of the surface of the at least one workpiece, which degree of cleaning is derived from the output signal, is displayed to a user using an optical display.

Furthermore, according to an embodiment, a recommended speed for moving the torch manually is displayed to the user using an optical display (this display can be same display that is used for displaying the degree of cleaning). The recommended speed is preferably selected such that a desired cleaning effect is achieved without melting of the surface or with partial melting of the surface. In case partial melting of the surface occurs said speed is preferably selected such that less than 20% of the surface melts, preferably less than 5% of the surface of the at least one workpiece.

According to a further embodiment of the method, impurities of the surface of the at least one workpiece evaporated by the electric arc or by the plasma jet are withdrawn by suction from the at least one workpiece, preferably through an exhaust channel connected to the torch. Thus, particularly, the exhaust channel can move together with the torch and is thus able to withdraw evaporated impurities in the vicinity of the respective point of origin.

According to yet another embodiment of the present invention, the at least one output signal is recorded for a workpiece having a clean surface in case of no melting during cleaning and in case of melting of the surface during cleaning, wherein when cleaning of a workpiece having a contaminated surface is conducted, the at least one output signal is continuously compared to both recorded output signals in order to determine if the surface is clean and/or if the surface is getting melted upon cleaning of the surface.

Furthermore, in an embodiment, in case the at least one output signal indicates that the surface of the workpiece is getting melted, the electric current relating to the electric arc or plasma jet is automatically reduced and/or the speed of the torch is automatically increased.

According to a further embodiment, a surface of a workpiece that needs to be cleaned is cleaned in a test run, wherein the at least one output signal is analyzed using multivariate processes and a deep learning algorithm. In this way the process is optimized with respect to specific conditions and is able to properly react during cleaning of a workpiece to such conditions.

According to a further aspect of the present invention, a system for cleaning a surface of at least one workpiece made out of an aluminium alloy is disclosed, wherein the system comprises:
- a torch configured to generate an electric arc or a plasma jet,
- wherein the system is configured to generate at least one output signal indicative of the presence of impurities of the surface evaporated by the electric arc or plasma jet.

According to a preferred embodiment, the system comprises one of:
- an optical sensor configured to detecting light coming from the electric arc or plasma jet by means of an optical sensor, wherein the optical sensor generates said at least one output signal,
- a module configured to derive the at least one output signal from an electrical voltage used to generate the electric arc or plasma jet and/or from a corresponding electrical current of the electric arc or plasma jet,
- a sound sensor configured to detect sound waves coming from the electric arc or plasma jet, wherein the sound sensor generates the at least one output signal.

According to a further embodiment of the system, the latter comprises a processing unit configured to analyze the output signal and particularly configured to control the electric arc or plasma jet of the torch, wherein the system is configured to direct the electric arc or the plasma jet onto the surface of the at least one workpiece until the processing unit determines that the output signal obeys a predefined criterion corresponding to a desired degree of cleaning of the surface.

Furthermore, according to an embodiment of the system, the system comprises a movement generating device, preferably in form of a robot such as a robot arm, which movement generating device is configured to move the torch with respect to the at least one workpiece in order to clean the surface of the at least one workpiece using the electric arc or plasma jet.

For guiding the torch, particularly in case the torch is moved manually along the surface to be cleaned by a user, the system preferably comprises a guiding device in an embodiment, wherein the guiding device is preferably connected to the torch and is configured to mechanically interact with the at least one workpiece to guide the torch upon moving the torch with respect to the at least one workpiece in a manner that a distance between the torch and the surface is maintained at a constant level.

Furthermore, according to an embodiment of the system, the system is configured to automatically adjust an electric current corresponding to the electric arc or to the plasma jet with respect to said relative movement of the torch and the at least one workpiece. In this way, it can be ensured that a uniform cleaning result can be achieved. Particularly in case the torch is moved slower, the current is reduced. On the other hand, in case the torch is moved faster with respect to the at least one workpiece, the current is increased.

According to a further embodiment of the system according to the present invention, the system comprises an optical display connected to the processing unit, wherein the system is configured to display said degree of cleaning of the surface of the at least one workpiece on the optical display, which degree of cleaning is derived from the output signal of the sensor by the processing unit.

Furthermore, the optical display can be configured to display a recommended speed for moving the torch manually to the user, wherein said recommended speed can be estimated by the processing unit.

Furthermore, as already indicated above, the system can be taught to properly clean the surface of a workpiece by acquiring output signal from the welding process (e.g. light and/or electrical signals and/or sound, see above) on a 100% clean (e.g. aluminium) surface for settings with and for settings without any melting of the surface. Both data sets (acquired output signals) are stored in the processing unit. When cleaning a contaminated surface of a workpiece the at least one output signal is continuously compared to both data sets, e.g. by quotient formation, in order to determine if the surface is clean or if the surface is getting melted upon cleaning.

If the signals show that the surface is getting melted, the system can automatically reduce e.g. the electrical current or increase the speed of the torch with respect to the workpiece.

The system can also be taught by conducting some test run on a material that needs to be cleaned. This data is analyzed using multivariate processes and a deep learning algorithm. In this way, the system is optimized to the special conditions (that are specific for respective application) and the system learns from patterns and can react during operation to situations that did not even occur beforehand (e.g. melting).

According to yet another embodiment, the system comprises an exhaust channel configured to withdraw evaporated impurities by suction, wherein preferably the exhaust channel is connected to the torch (see also above).

In the following, embodiments, further features and advantages of the present invention shall be explained with reference to the Figures, wherein
- Fig. 1: shows a schematic illustration of a method and system according to the present invention, wherein the torch is of the system is moved by means of a movement generating device such as a robot arm;
- Fig. 2: shows a schematic illustration of a method and system according to the present invention, wherein the torch is moved manually; and
- Fig. 3: shows an application of the method and system according to the present invention to the welding/cleaning of two workpieces (for example pipes) that shall be joined by a welding seam.

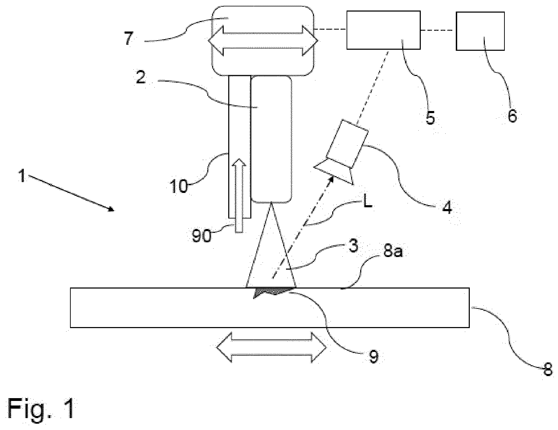

As schematically illustrated in Fig. 1, the present invention is based on the idea to clean the surface 8a of an aluminum alloy workpiece 8 using an electric arc 3 or a plasma jet 3 that is applied to the surface 8a of the workpiece 8 to be cleaned.

According to Fig. 1, a system 1 that is proposed according to the invention to carry out this task comprises at least a torch 2, such as a welding torch, configured to generate an electric arc 3 or a plasma jet 3, and an optical sensor 4 configured to detecting light L coming from the electric arc 3 or plasma jet 3 when the electric arc 3 or plasma jet 3 is directed onto the surface 8a of the workpiece 8, wherein the optical sensor 4 is configured to generate an output signal indicative of the presence of impurities 9 of the surface 8a evaporated by the electric arc 3 or plasma jet 3.

Preferably, the system 1 comprises a processing unit 5 configured to analyze the output signal provided by the optical sensor 4, wherein the system 1 is configured to direct the electric arc 3 or the plasma jet 3 onto the surface 8a of the at least one workpiece 8 until the processing unit 5 determines that the output signal obeys a predefined criterion corresponding to a desired degree of cleaning of the surface 8a of the at least one workpiece 8. Before comparing the output signal or a quantity derived therefrom to the criterion, the output signal can be pre-processed in a suitable manner, e.g. by means of filtering etc.

Due to the high temperatures and the electric arc/plasma jet 3 and its arc attachment, impurities 9 of any kind residing on the surface 8a of the workpiece 8 are safely removed without significantly melting the surface of the workpiece 8. The electric arc 3 can be generated by the welding torch 2 with an appropriate power source. The system 1 can be configured to use direct current, pulsed direct current or alternating current to generate the electric arc 3. Particularly, the system 1 is configured such that the workpiece 8 can be connected to the power source as an anode or as a cathode. Particularly, the welding torch 2 can comprise a tungsten electrode that forms the corresponding counter electrode.

According to an alternative embodiment, the torch 2 may also be configured to generate a plasma jet to clean the surface 8a of the workpiece 8. Here, the workpiece 8 does not have to be integrated into the circuit.

Particularly, the torch 2 can be stationary and the workpiece 8 can be guided relative to the torch 2. Alternatively, as shown in Fig. 1, the torch 2 can be moved with respect to the stationary workpiece 8 by means of a movement generating device 7, such as a robot arm.

The evaporation of impurities 9 due to the arc/plasma jet 3 changes the light spectrum of the light L emitted by the arc 3 or plasma jet 3. As stated above, at least one optical sensor 4 is used to detect the presence of such impurities 9. The at least one optical sensor 4 can be formed by a digital camera, or may comprise a photo diode or a spectrometer to analyze the spectrum of the detected light L from the arc/plasma jet 3.

If a camera or photo diodes are used, such devices can be combined with optical filters. A combination of sensors may be used to properly determine the level of cleaning: an optical sensor, a sound sensor, voltage and current sensors, etc. Different signals indicate a particular aspect of the cleaning process: light may indicate the surface impurity types, the sound can indicate the level of arc fluctuations as an indication of the radial extension of the arc. The voltage/current signals may be used to verify the extent of the cleaning.

The process can be automated to such an extent that the surface 8a of the workpiece 8 is processed by the arc or plasma jet 3 until the corresponding output signal does no longer indicate detectable impurities 9 or corresponding amplitudes of the output signal are below a predefinable threshold. Preferably, for surfaces 8a with varying degrees of soiling, only the dirty or still dirty areas are cleaned again by the arc/plasma jet 3 on the basis of the detected output signal. Areas of the surface 8a that have already been sufficiently cleaned are left out to increase efficiency.

Particularly, as indicated in Fig. 1, the torch 2 can be moved by a robot 7, such as a robotic arm. The robot 7 is preferably configured to switch between cleaning and welding. For this purpose, it is conceivable to change the welding torch 2 or to only change the welding parameters/operating parameters of the torch 2. Instead of a robot 7, a tractor or another movement generating device can be used to move the torch 2 along the surface 8a to be cleaned.

Furthermore, the magnitude of the electric current used for generating the electric arc 3 or plasma jet 3 can be adapted to the relative movement between torch 2 and workpiece 8. Argon, Helium, Argon Helium mixtures with and without oxygen can be used. Particularly, a torch can be employed that uses a gas doped with oxygen (e.g. 300 ppm range). Furthermore, torches employing a shielding gas as well as a focus gas can be used in conjunction with the method according to the present invention.

Further, according to an embodiment, the operator is shown the degree of cleaning, e.g. on a display 6 and/or through a visual signal. For example, a visual green signal can be used to indicate a cleaned surface 8a, while a visual orange signal can be used to indicate an insufficiently cleaned surface 8a, and a red visual signal can be used to indicate an uncleaned surface 8a of the workpiece 8.

Furthermore, as indicated in Fig. 1, the torch 2 can be equipped with an exhaust channel 10 that can be connected to a suction device to suck off the evaporated impurities 90. Advantageously, the exhaust channel 10 moves with the torch 2 and impurities 90 can be withdrawn from their respective point of origin upon treating the surface 8a with the arc 3 or plasma jet 3.

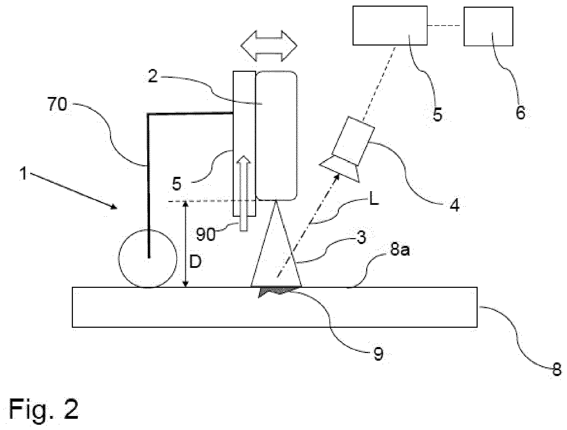

In case the welding torch 2 is manually moved by a user as shown in Fig. 2, a recommendation for the speed of the manual movement can be given by the system 1 (e.g. via display 6). For automated applications (cf. Fig. 1), the system 1 is preferably configured to automatically adjust the movement speed of the torch 2 with respect to the surface 8a to be cleaned.

Furthermore, as indicated in Fig. 2, in order to facilitate manual positioning of the torch 2 relative to the surface 8a of the workpiece 8 to be cleaned, the torch 2 is equipped with a guiding device 70 connected to the torch 2. The guiding device 70 may comprise at least one roller or slider that preferably allow only one degree of movement (e.g. in a cleaning direction) and preferably exclude all other directions of movement, so that the arc 3 or plasma jet 3 always runs at the same distance D and preferably always centrally over the surface 8a to be cleaned.

It is also possible to automatically adapt the magnitude of the electric current corresponding to the electric arc/plasma jet 3 to the travel speed of the torch 2 relative to the workpiece 8 to ensure optimum cleaning. To avoid melting or excessive melting of the surface 8a of the workpiece 8, the information of the light quanta of the aluminium spectrum of the surface 8a can also be used, and/or the electrical signals of the arc current and arc voltage (e.g. in case of a transferred arc). As indicated, combining the current/voltage signal with the optical and sound signals one can establish operating ranges (stored e.g. in the power source) of what is considered to be a properly cleaned surface.

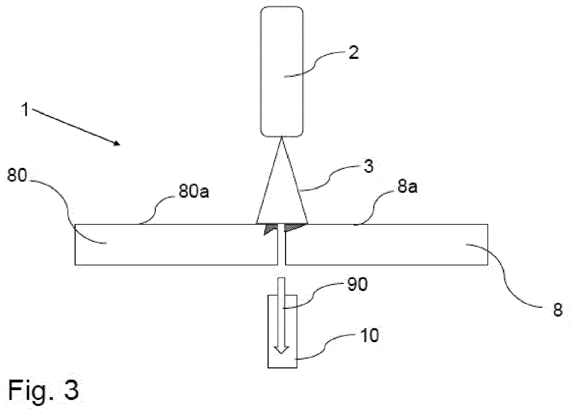

If two surfaces 8a, 80a have to be joined together as shown in Fig. 3 for example, e.g. for welding two pipe segments 8, 80 together, both pipe segments 8, 80 can be positioned relative to one another up to a distance of a few millimeters (e.g. 0 mm to 15 mm) and simultaneously exposed to the arc 3 or plasma jet 3 provided by the torch 2 for cleaning both surfaces 8a, 80a at the same time.

When working with a transferred arc 3, the pipe segments 8, 80 are integrated into the circuit. It is advantageous to position the torch 2 for cleaning on the opposite side from which the components 8, 80 are welded. In addition, with this procedure, an exhaust channel 10 for withdrawing evaporated impurities 90 can be positioned on the opposite side to the cleaning arc/plasma jet 3.

## Claims

1. A method for cleaning of a surface (8a) of at least one workpiece (8) made out of an aluminium alloy, comprising the steps of
- generating an electric arc (3) or a plasma jet (3) by means of a torch (2), applying the electric arc (3) or the plasma jet (3) to the surface (8a), and moving the torch (2) and the at least one workpiece (8) relative to one another to clean the surface (8a) by evaporating impurities (9) of the surface (8a) using the electric arc (3) or plasma jet (3), and
- generating at least one output signal indicative of the presence of impurities (9) of the surface (8a) evaporated by the electric arc (3) or by the plasma jet (3).

2. The method according to claim 1, wherein the step of generating at least one output signal corresponds to one of:
- Detecting light coming from the electric arc or plasma jet by means of an optical sensor, wherein the optical sensor generates at least one output signal indicative of the presence of impurities (9) of the surface (8a) evaporated by the electric arc (3) or by the plasma jet (3),
- deriving at least one output signal indicative of the presence of impurities (9) of the surface (8a) evaporated by the electric arc (3) or by the plasma jet (3) from an electrical voltage used to generate the electric arc or plasma jet and/or from a corresponding electrical current,
- detecting sound waves coming from the electric arc or plasma jet by means of a sound sensor, wherein the sound sensor generates at least one output signal indicative of the presence of impurities (9) of the surface (8a) evaporated by the electric arc (3) or by the plasma jet (3).

3. The method according to claim 1 or 2, wherein the surface (8a) is processed by the electric arc (3) or by the plasma jet (3) until the at least one output signal obeys a predefined criterion corresponding to a desired degree of cleaning of the surface (8a) of the at least one workpiece.

4. The method according to one of the preceding claims, wherein moving the torch (2) and the at least one workpiece (8) relative to one another corresponds to one of: moving the torch (2) relative to the stationary at least one workpiece (8); moving the at least one workpiece (8) relative to the stationary torch (2); moving the torch (2) and moving the at least one workpiece (8).

5. The method according to one of the preceding claims, wherein the torch (2) is moved with a movement generating device (7), preferably in form of a robotic arm, or wherein the torch (2) is manually moved with respect to the surface (8a) of the at least one workpiece (8).

6. The method according to claim 5, wherein the torch (2) is guided by a guiding device (70) so that a distance (D) between the torch (2) and the surface (8a) of the at least one workpiece (8) is maintained at a constant magnitude upon said relative movement between the torch (2) and the at least one workpiece (8).

7. The method according to one of the preceding claims, wherein an electric current corresponding to the electric arc (3) or to the plasma jet (3) is automatically adapted to said relative movement of the torch (2) and the at least one workpiece (8) and / or to said at least one output signal.

8. The method according to one of the preceding claims, wherein a degree of cleaning of the surface (8a) of the at least one workpiece (8), that is derived from the at least one output signal, is displayed to a user using an optical display (6).

9. The method according to claim 5, wherein a recommended speed for moving the torch manually is displayed to the user using an optical display (6).

10. The method according to one of the preceding claims, wherein impurities (9) evaporated by the electric arc (3) or by the plasma jet (3) are withdrawn by suction, preferably through an exhaust channel (10) connected to the torch (2).

11. The method according to one of the preceding claims, wherein the at least one output signal is recorded for a workpiece having a clean surface in case of no melting during cleaning and in case of melting of the surface during cleaning, wherein when cleaning of a workpiece having a contaminated surface is conducted, the at least one output signal is continuously compared to both recorded output signals in order to determine if the surface is clean and/or if the surface is getting melted upon cleaning of the surface.

12. A system (1) for cleaning a surface (8a) of at least one workpiece (8) made out of an aluminium alloy, comprising
- a torch (2) configured to generate an electric arc (3) or a plasma jet (3), wherein the system (1) is configured to generate at least one output signal indicative of the presence of impurities (9) of the surface (8a) evaporated by the electric arc (3) or plasma jet (3).

13. The system according to claim 12, wherein the system comprises one of:
- an optical sensor configured to detecting light coming from the electric arc or plasma jet by means of an optical sensor, wherein the optical sensor generates said at least one output signal,
- a module configured to derive the at least one output signal from an electrical voltage used to generate the electric arc or plasma jet and/or from a corresponding electrical current,
- a sound sensor configured to detect sound waves coming from the electric arc or plasma jet, wherein the sound sensor generates the at least one output signal.

14. The system according to claim 12 or 13, wherein the system (1) comprises a processing unit (5) configured to analyze the at least one output signal, wherein the system (1) is configured to direct the electric arc (3) or the plasma jet (3) onto the surface (8a) of the at least one workpiece (8) until the processing unit (5) determines that the at least one output signal obeys a predefined criterion corresponding to a desired degree of cleaning of the surface (8a) of the at least one workpiece (8).

15. The system according to one of the claims 13 to 14, wherein the system comprises a movement generating device (7), preferably in form of a robotic arm, that is configured to move the torch (2) with respect to the at least one workpiece (8).
